# EUROPEAN PATENT APPLICATION

(11) **EP 4 131 720 A1**
(43) Date of publication of application: **08.02.2023**
(21) Application number: 22188556.9
(22) Date of filing: 03.08.2022
(51) Int. Cl.: H02J 50/00, B60L 53/12, H01F 38/14, H04B 5/00, B64C 39/02

(54) **WIRELESS POWER RECEIVER DESIGN FOR DRONES**

(30) Priority: 03.08.2021 US 202163228661 P; 01.08.2022 US 202217878434
(71) Applicant: Powermat Technologies Ltd., 4970602 Petach Tikva (IL)
(72) Inventor: SHERMAN, Itay, 4970602 Petah Tikva (IL); MACH, Elieser, 4970602 Petah Tikva (IL)
(74) Representative: Maiwald GmbH

(57) **Abstract**

A wireless power receiver coil (104) is attached to a retractable landing gear (102) of a drone (100) via retractable elements (103). The wireless power receiver coil is closer to the drone when the landing gear is in a retracted position (fig. 2) and farther away from the drone when the landing gear is in an extended position (fig. 1). A length of the wireless power receiver coil may be the same length when the landing gear is in the retracted position and in the extended position. The wireless power receiver coil may be in a first orientation when the landing gear is in the retracted position and the wireless power receiver coil may be in a different orientation when the landing gear is in the extended position. The wireless power receiver coil may have a first shape when the landing gear is in the retracted position and may have a second shape when the landing gear is in the extended position.

## Description

### CROSS REFERENCE TO RELATED APPLICATIONS

This application claims the benefit of U.S. Provisional Application No. 63/228,661, filed August 3, 2021, and of U.S. application 17/878,434, filed 1 August 2022, which are incorporated by reference as if fully set forth.

### FIELD OF INVENTION

The disclosure relates generally to wireless power transfer systems, and more specifically, to a wireless power receiver for a drone.

### BACKGROUND

Most drones are battery powered and provide limited operation time, much dependent on their rechargeable battery capacity. In order to provide long operation time, the drone operator is required to recharge the drone battery or replace it with a charged battery. The charging operation typically requires operator manual intervention in connection of the battery or drone to a dedicated charger.

### SUMMARY

A wireless power receiver coil is attached to a landing gear of a drone. The wireless power receiver coil is closer to the drone when the landing gear is in a retracted position and farther away from the drone when the landing gear is in an extended position. A length of the wireless power receiver coil may be the same length when the landing gear is in the retracted position and in the extended position. The wireless power receiver coil may be in a first orientation when the landing gear is in the retracted position and the wireless power receiver coil may be in a different orientation when the landing gear is in the extended position. The wireless power receiver coil may have a first shape when the landing gear is in the retracted position and the wireless power receiver coil may have a second shape when the landing gear is in the extended position. The wireless power receiver coil length may have the same shape when the landing gear moves between the retracted position and the extended position. The wireless power receiver coil may be configured to, when the landing gear is in the extended position and the landing gear is on a landing pad, receiver power inductively from a wireless power transmitter coil in the landing pad. The landing pad may be elevated. The wireless power receiver coil may be attached to retractable elements of landing feet of the landing gear. The retractable elements may be extended when the landing gear is in the extended position and may be retracted into the landing feet when the landing gear is in the retracted position. A length of the wireless power receiver coil may be longer when the landing gear is in the extended position and shorter when the landing gear is in the retracted position. The wireless power receiver coil may be configured to retract around a wheel when the landing gear moves from the extended position to the retracted position. The wireless power receiver coil may be configured to separate when the landing gear moves from the extended position to the retracted position. The wireless power receiver coil may be configured to join together at two locations when the landing gear moves from the retracted position to the extended position. The wireless power receiver coil may be surrounded by a flexible conduit. The wireless power receiver coil may be wrapped around landing legs of the drone. The wireless power receiver coil may be connected to wheel elements. The wheel elements may move along the landing legs when the landing legs move between a folded and un-folded position.

### BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 shows an example wireless power receiver coil attached to a drone in a landing position;
FIG. 2 shows an example wireless power receiver coil attached to a drone in a flight position;
FIG. 3 shows an example wireless power receiver coil wire in a connected state;
FIG. 4 shows an example wireless power receiver coil wire in a separated state;
FIG. 5 shows an example drone with foldable landing gear with a wireless power receiving coil in a landing position;
FIG. 6 shows the drone of FIG. 5 in a flight position;
FIG. 7A shows an example drone in a landing position with a wireless power receiver coil surrounded by tubes;
FIG. 7B shows an example drone in a landing position with a wireless power receiver coil surrounded by tubes;
FIG. 8A shows an example drone in a flight position with a wireless power receiver coil surrounded by tubes;
FIG. 8B shows an example drone in a flight position with a wireless power receiver coil surrounded by tubes;
FIG. 9A shows an example drone with a wireless power receiver coil in a landing position;
FIG. 9B shows an example drone with a wireless power receiver coil in a landing position;
FIG. 9C shows an example drone with a wireless power receiver coil in a landing position;
FIG. 10A shows an example drone with a wireless power receiver coil in a flight position;
FIG. 10B shows an example drone with a wireless power receiver coil in a flight position;
FIG. 11A shows an example drone with a wireless power receiver coil in a landing position;
FIG. 11B shows an example drone with a wireless power receiver coil in a landing position;
FIG. 12A shows an example drone with a wireless power receiver coil in a flight position;
FIG. 12B shows an example drone with a wireless power receiver coil in a flight position;
FIG. 12C shows an example drone with a wireless power receiver coil in a flight position; and
FIG. 13 shows an example drone with a wireless power receiver coil on a landing pad with a wireless power transmitter coil.

### DETAILED DESCRIPTION

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

Some systems allow for automatic charging of a drone battery by robotic mechanisms for mechanical connection to battery leads. Other systems includes a wireless power system that uses a transmitter coil mounted on or below a landing pad and a receiver coil mounted on the drone and connected via a dedicated circuit providing rectification and possibly charging control to the drone battery.

In order to achieve efficient power transfer, the receiver coil must have some minimal inductance. The inductance is related to the dimensions of the coil and the number of wire loops it includes. In many wireless power transfer applications, it is important to avoid the existence of metallic objects within the magnetic field transferring the power. Metallic objects may affect the parameters of the coil, including inductance and resistance, to the extent of preventing wireless power transfer altogether. Metallic objects may heat up if they are in the vicinity of the field carrying the energy. For many reasons it is preferred to keep metallic objects away from the component used for wireless power transfer as well as from the field itself. Exact values of a recommended distance between the metallic objects, under the transmitter pad or around the drone itself, depend on many parameters and vary from one system to another. However, the recommendation of distancing metallic objects from the magnetic field and relevant components is true in most wireless power transfer systems.

To achieve a reasonable wireless power receiver coil size, a wireless power receiver coil, which may be referred to herein as receiver coil or coil, is typically mounted either around the drone landing legs or around the propellers holding rods. Existing systems have the receiver coil being fixed. As such, the receiver coil creates complications to drone operation since it increases drag during flight as well as increased risk of crashing or destabilizing the drone and colliding with objects in its path.

In some wireless power transfer systems, it is preferred that the magnetic field induced by a wireless power transmitter coil onto a receiver coil is kept further away from metallic parts such as the drone body or drone camera. The solutions provided herein maintain this advantage of locating an induction coil further away from a metallic body of the drone while wireless power transfer is active and reducing possible interference between the charging field and other sensitive elements on the drone, while allowing minimal interference to the drone during flight.

Some of the more advanced drones use some form of foldable landing gear. This improves drone flight performance by reducing drag during flight and reducing collision risks. It may also reduce interference to a field view of the drone camera.

The use of a foldable landing gear may be complemented by a foldable wireless power receiving coil to enable more efficient wireless power transfer to the drone battery while avoiding the problematic effects of the receiving coil.

Using several receiving coils may be easier for mechanical purposes. For example, a coil may be wrapped around each leg of the landing gear. If several receiver coils are used, the transmitter needs suitable matching transmitter coils for optimal power transfer and to allow relative free landing accuracy for the drone. This disclosure focuses on having a single coil both in the transmitter (Tx) as well as in the receiver (Rx). Using a single coil in the Tx and Rx is simpler and more cost effective.

Foldable landing gear may be triggered to open or close by one or more elements such as an height sensor or a controlling application.

In the disclosure, the terms "closed", "retracted", "flight position" or "non-charging position" may refer to the landing gear and receiver coil close to the drone body for flight. The term "open", "extended", "landing position" or "charging position" may refer to the landing gear and receiver coil farther away from the drone body for landing and/or charging the drone battery. Antenna may refer to a receiving coil. The receiving coil may be comprised of wire or any other conducting element. A coil may be comprised of one or a plurality of turns or windings of wire.

An embodiment of a foldable antenna or receiving coil is based on the idea of keeping the overall length of wire and also of a single coil loop to be the same, for an open position and a closed position. The coil wires may be anchored on several points, for example on four corners, to movable elements of the drone body or landing gear. The open and closed positions of these anchor points may form two shapes respectively (e.g., two polygons) that have an identical or substantially close to identical length (e.g., circumference or perimeter). The open position may have one shape or orientation and the closed position may have a second shape or orientation. The fixed length may be kept the same, or substantially the same, during the process of anchor points moving from a closed position to an open position and from an open position to a closed position.

A closed position may be selected such that the receiver coil is situated in that it minimizes drag, reduce chances of tangling with objects along a flight path, and removes obstruction to a camera view, while the receiver coil in the open position offers a large coil area to maximize a power transfer efficiency and improve coupling to a wireless power transmitter coil.

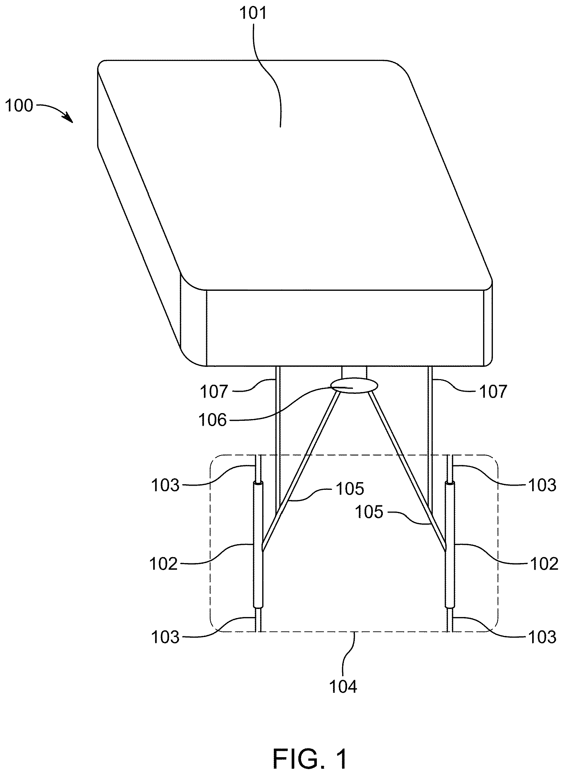

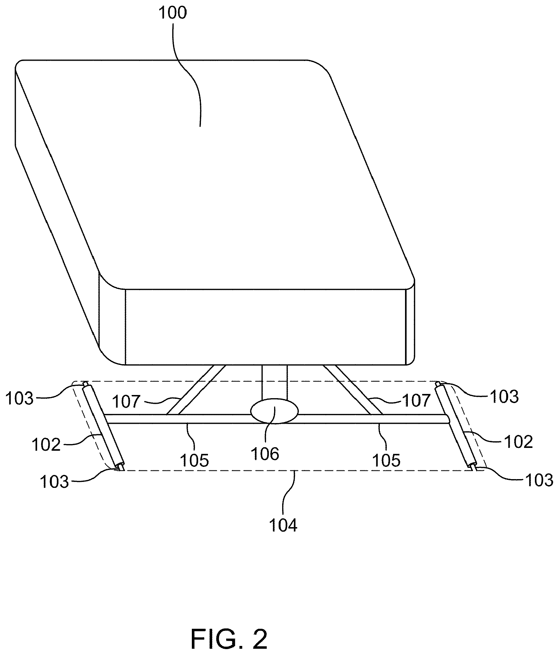

FIG. 1 show an example of wireless power receiver coil attached to a drone in a landing / charging position (i.e., landing gear extended or open). FIG. 2 shows an example of a wireless power receiver coil attached to a drone in a flight / non-charging position (landing gear retracted or closed).

In FIG. 1, the drone (100) comprises a foldable landing gear. The foldable landing gear is shown in an open (i.e., extended / landing / charging position). Landing bars (102) which are configured to make contract with a surface (e.g., ground or landing pad), comprise retractable elements (103). The retractable elements (103) are configured to move in and out of the landing bars (102). Coil wires (104) (e.g., wireless power receiver coil) may be wrapped around or attached to the ends of the retractable elements (103). The landing bars (102) may be connected to the drone body (101) via, for example, connection bars (105) that may be attached to the drone body (101) via a hinge (106) and a piston (107) connected between the connection bars (105) and the drone body (101), which may raise the landing bars (102) for flight position (i.e., closed / retracted / non-charging position) or lower or fold the landing bars (102) down (i.e., open / extended / charging position) for landing / charging.

The retractable elements (103) of the landing bars (102) may be connected to the piston (106) or have a separate folding / moving mechanism. Since the landing bars (102) have the retractable elements (103), the overall length (i.e., circumference or perimeter) of the coil is the same, or substantially the same, whether the landing gear is in a closed position for flight as well as in an open position for landing and when on a charging pad for wireless power transfer. For example, FIG. 2 shows the drone from FIG. 1 with the landing gear in the closed position. As shown in FIG. 2, the shape or orientation of the receiver coil is different in the closed position than in the open position of FIG. 1, but the length (i.e., perimeter or circumference) is the same or substantially the same. The receiver coil wire is closer to the drone body in the closed position and farther away from the drone body in the open position.

In an embodiment, a change in anchor points may decrease the length (circumference or perimeter) of the shape on which the coil is mounted. The excess coil wire may be retracted to, for example, a wire roller bank below the drone body. The wire roller may include a spring that may provide retracting pressure on the coil wire. When the landing gear is in an open or landing position, a landing gear piston, or other folding element, may provide a position force on the coil wire which may allow it to be extracted from the roller. When the landing gear is closed or in a flight position the extra wire is rolled in due to the pressure applied by a return spring in the roller.

For the embodiments above, the anchor points of the coil wire allow the coil wire to slip over the anchor point in the direction parallel to the coil wire so it may change its length to fit the shape created by the anchor points, but it prevents it from slipping out of place and falling off (i.e., it limits movement in directions perpendicular to the coil wire direction). In an embodiment, this may be achieved by the anchor points having rounded corners having a smooth finish and inner curvature allowing the coil wire to move along the curved area without moving out and away perpendicular to the direction of the coil wire.

In an embodiment, the anchor points may comprise a small wheel with a cover. The coil wire may roll on the wheel and may be kept in place by the wheel cover.

In an embodiment, the receiver coil may be made of a suitable conductor, for example litz wire, that may be embedded in part along some fixed element of the landing gear. The receiver coil may be configured to separate. At the points of separation, which may be required for retracting, suitable galvanic connections may be exposed such that upon landing, the galvanic connections may come in touch and bring two or more parts of the receiver coil together in an electrical connection.

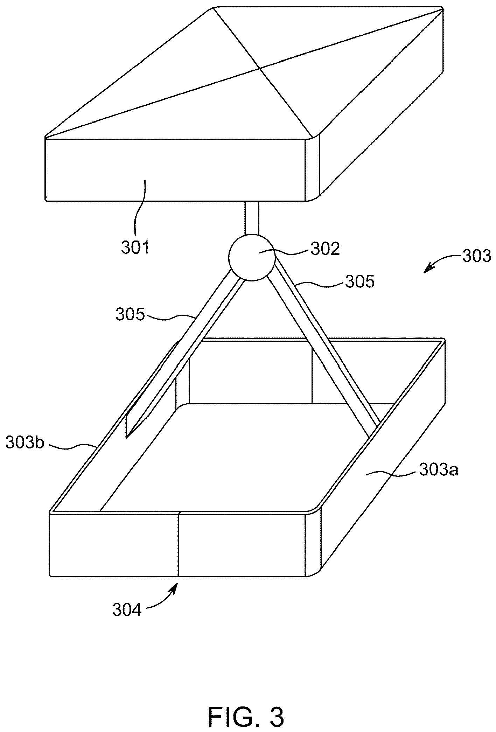

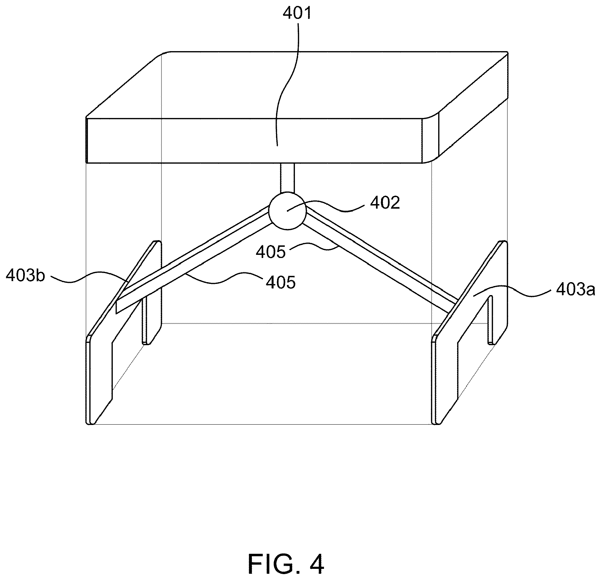

FIG. 3 shows an example wireless power receiver coil wire in a connected state. FIG. 4 shows an example wireless power receiver coil wire in a separated state.

FIG. 3 shows a drone body (301) with a hinge (302) beneath the drone body (301). The hinge (302) may be connected to connecting bars (305). The connecting bars may be connected to a fixed rectangular or square shaped frame (303) comprising conductors that form a receiver coil. At location (304), the fixed frame (303) may be split open, separating the two halves of the frame (303a, 303b). The connecting bars (305) may be configured to move in an opposite direction and thereby move the frame into an open configuration, as shown in FIG. 4, where the receiver coil windings are not connected. The connecting bars (305) may be configured to move in a same direction towards each other and thereby move the frame into a closed configuration, as shown in FIG. 3, where the coil conductors are galvanically connected, closing the loop of the receiver coil, so that wireless power transfer may occur. At the point of connection (304), different methods may be used to ensure a proper electrical connection between the two sides of the receiver coil conductors (e.g., magnet-based connectors or pogo pins).

FIG. 4 shows the drone (401) with the frame in an open position. The two halves of the frame (403a and 403b) may be further elevated and moved closer to the drone body, if necessary, in order to further reduce interference during flight and operation of the drone.

In an embodiment, a receiving coil will be close to a landing pad and a transmitting coil in the landing pad when in a landing or charging position. In a flight mode, the receiving coil will be pulled up towards the body of the drone, reducing undesired complications discussed above.

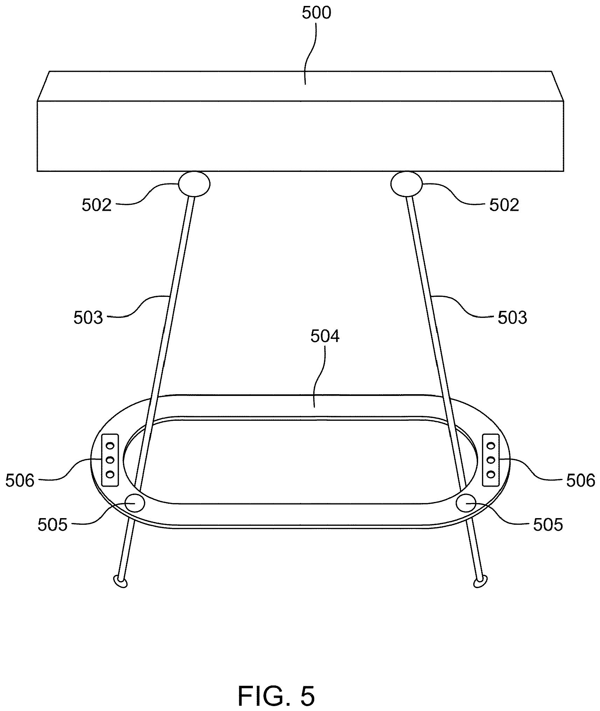

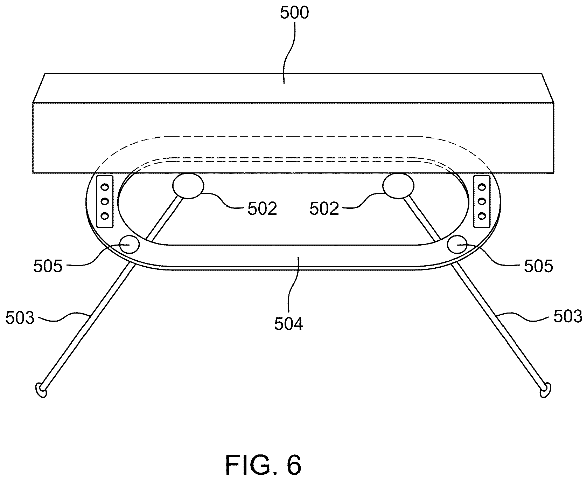

FIG. 5 shows a drone with foldable landing gear with a wireless power receiving coil in a landing / charging position. FIG. 6 shows the drone of FIG. 5 in a flight / non-charging position.

In FIG. 5, the drone (500) is shown in a landing position with the landing gear extended. The drone (500) comprises two controlled wheel elements (502) configured to move to fold and unfold the landing legs (503). Although FIG.5 shows two landing legs (503) and two wheel elements (502), a different number of landing legs and wheel elements may be used. The number of wheel elements may be equal to the number of landing legs. A frame (504) may surround the legs (503) that may comprise the windings of the receiver coil (506). The frame (504) may be mounted on wheels (505) to allow up and down movement of the frame (504) along the landing legs (503). In an open position, the frame (504) and the receiver coil (506) inside it will be close to the landing pad and further away from the drone body.

In FIG. 6, the drone (500) is shown in a flight mode. In the flight mode, the landing legs (503) are in a folded position and are folded close to the drone body (i.e., closer than when in the landing mode as in FIG. 5). In the folded position, the frame (504) may have less effect on the flight of the drone.

In an embodiment, a receiver coil wire may be surrounded by one or more tubes (e.g., flexible conduit) except at the corners which allows folding of the receiver coil around its corners without dragging the receiver coil itself.

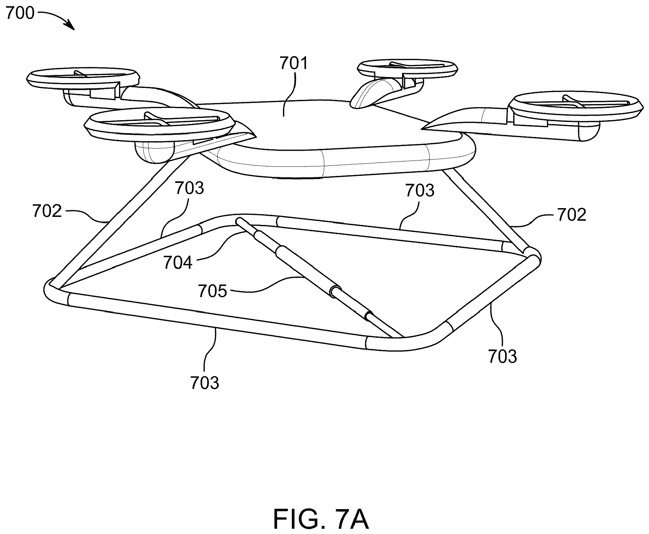

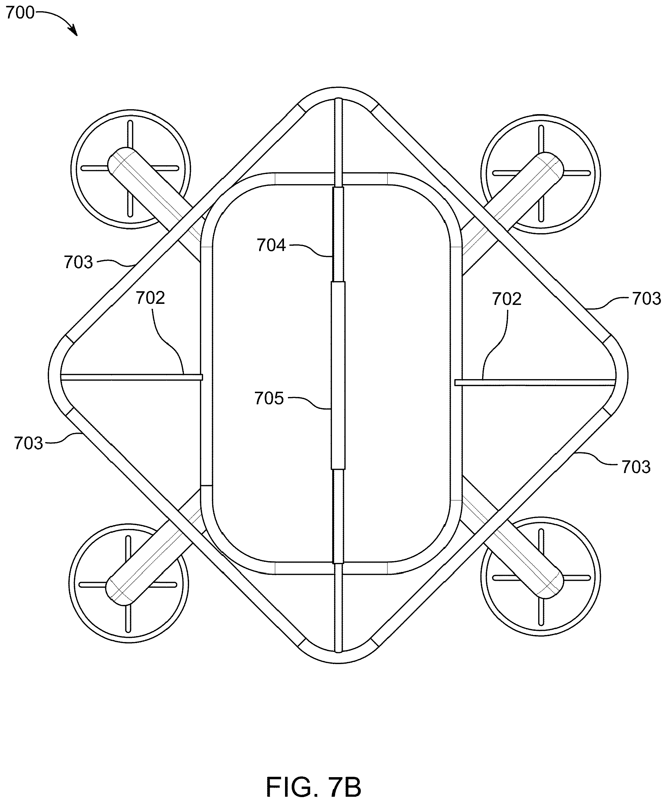

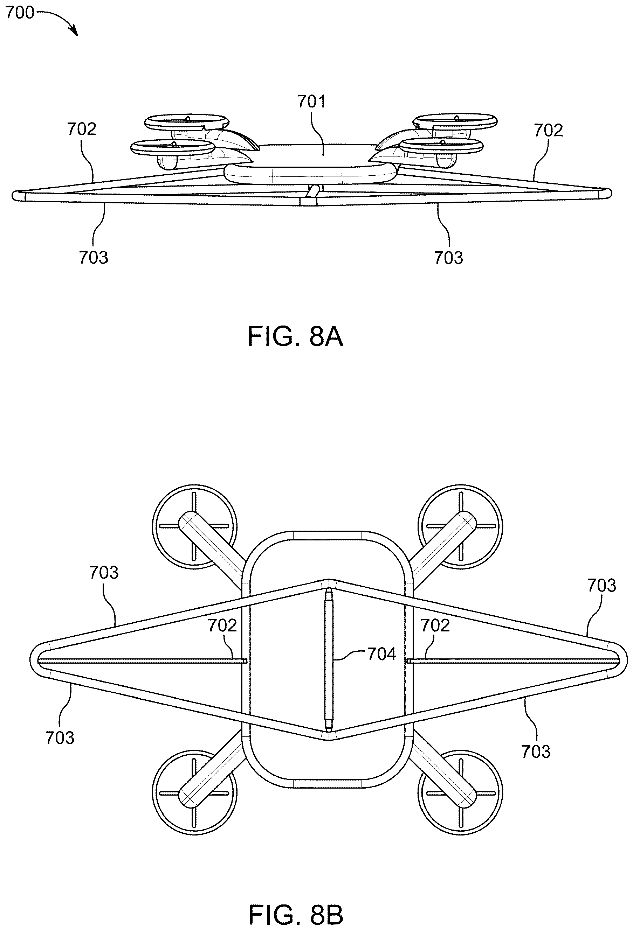

FIGs. 7A-7B show a drone with a wireless power receiver coil in a landing position (i.e., charging or extended position). FIGs. 8A-8B show the drone with the wireless power receiver coil in a flight position (i.e., non-charging or retracted position). A receiver coil is surrounded by tubes or conduits (703), except at the corners. Legs (702) attach to the receiver coil (703) at two locations. The legs (702) may attach to the receiver coil itself or the receiving coil may be enclosed in a tube (e.g., flexible conduit) and the legs (702) may attached to the tube. The other end of the legs (702) attach to the drone body (701). A structure (704) (e.g., a bar or tube) may be attached at two points of the tubes (703) diagonally. The structure (704) may comprise a piston (705) that is configured to move when the landing gear changes from an extended position to a retracted position and vice versa. In an extended mode, as shown in FIG. 7A and 7B, the receiver coil (703) is further away from the drone body than in a retracted mode, as shown in FIG. 8A and 8B.

When the drone changes from an extended (landing / charging) mode as shown in FIGs. 7A and 7B to a retracted (flight) mode as shown in FIGs. 8A and 8B, the structure (704) gets shorter, the piston (705) retracts, the tubes (703) and the receiver coil draws closer to the drone body (701) and also changes shape (e.g., from a rectangular shape to a diamond shape), and the ends of the legs (702) attached to the receiver coil (703) are pushed out and move up towards the drone body and away from each other. The length of receiver coil (703) stays the same. The receiver coil (703), as it is closer to the drone body in retracted orflight mode, is optimized for flight without the negative affects mentioned herein. The orientation of the diamond shaped coil may be planned in a way to minimize flight drag.

When the drone changes from a retracted (flight) mode as shown in FIGs. 8A and 8B to an extended (landing / charging) mode as shown in FIGs. 7A and 7B, the structure (704) gets longer, the piston (705) extends, the tubes (703) and the receiver coil draws away from the drone body (701) and also changes shape (e.g., from a diamond shape to a rectangular shape), and the ends of the legs (702) attached to the receiver coil (703) move down away from the drone body and towards each other. The receiver coil, as it is extended further away from the drone body, is optimized for wireless power transfer without the negative affects mentioned herein.

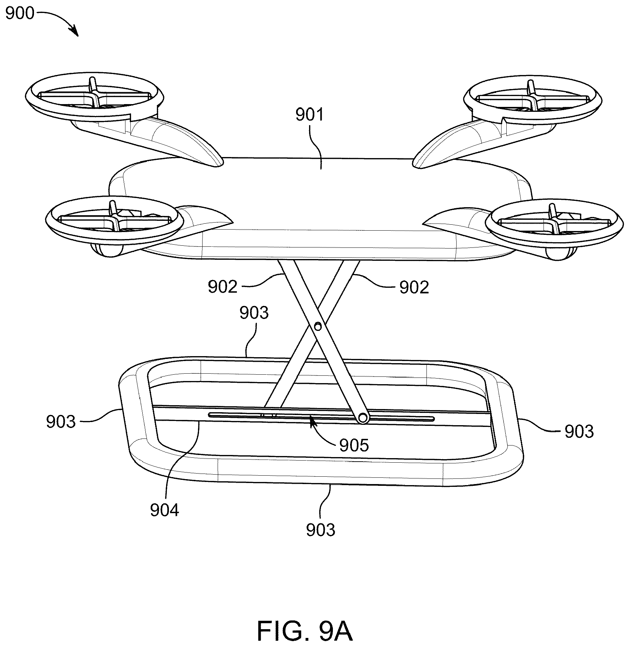

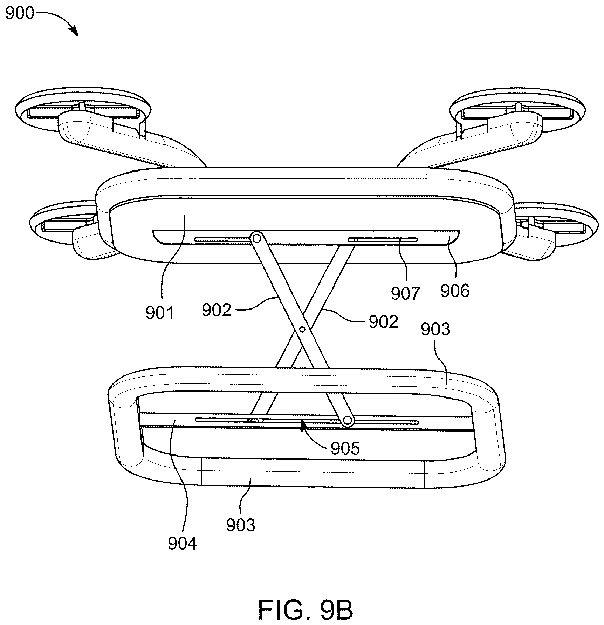

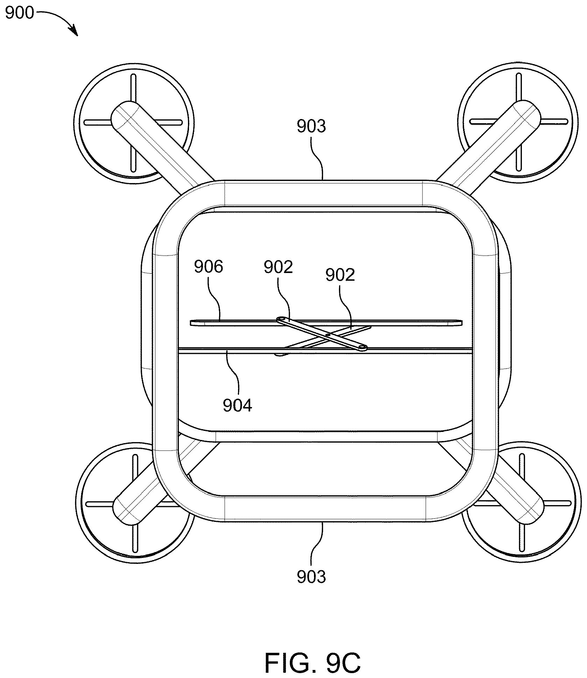

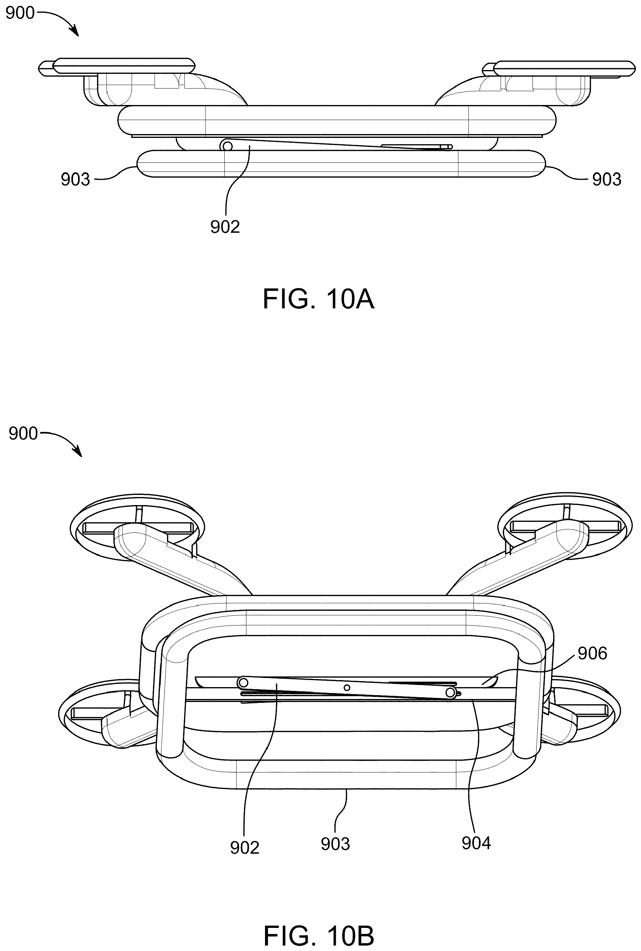

FIGs. 9A-9C show a drone (900) with a wireless power receiver coil in a landing position (i.e., charging or extended position) and FIGs. 10A-10B show the drone (900) with the wireless power receiver coil in a flight (i.e., non-charging or retracted position). A receiver coil (903) may be surrounded by one or more tubes (e.g., flexible conduit) . A structural support (904) attaches between two points at the receiver coil (903). Legs (902) attach between the drone body (901) and the structural support (904). The structural support (904) may have one or more openings or channels (905) where the legs (902) attach to the structural support (904) where the legs (902) are configured to slide or move along the length of the structural support (904). Legs (902) attach to a structural support (906) on the drone body (901), as shown FIG. 9B. The structural support (906) may have one or more openings or channels (907) where the legs (902) attach to the structural support (906) where the legs (902) are configured to slide or move along the length of the structural support (906). The legs (902) operate in a scissor like movement.

When the drone changes from an extended (landing / charging) mode as shown in FIGs. 9A-9C to a retracted (flight) mode as shown in FIGs. 10A-10B, the ends of the legs (902) attached to the structural support (904) are configured to move along the length of the structural support (904) in a direction away from each other, which moves the receiver coil (903) closer to the drone body (901). The ends of the legs (902) attached to the structural support (906) of the drone body (901) are also configured to move in a direction away from each other. The receiver coil (903) does not change shape or orientation, but gets pulled closer to the drone body (901). The receiver coil (903), as it is closer to the drone body (901) in retracted or flight mode, is optimized for flight without the negative affects mentioned herein.

When the drone changes from a retracted (flight) mode as shown in FIGs. 10A-10B to an extended (landing / charging) mode as shown in FIGs. 9A-9C, the ends of the legs (902) attached to the structural support (904) are configured to move along the length of the structural support (904) in a direction towards each other, which moves the receiver coil (903) away from the drone body (901). The ends of the legs (902) attached to the structural support (906) of the drone body (901) are also configured to move in a direction towards each other. The receiver coil (903) does not change shape or orientation, but gets moved away from the drone body (901). The receiver coil (903), as it is extended further away from the drone body (901), is optimized for wireless power transfer without the negative affects mentioned herein.

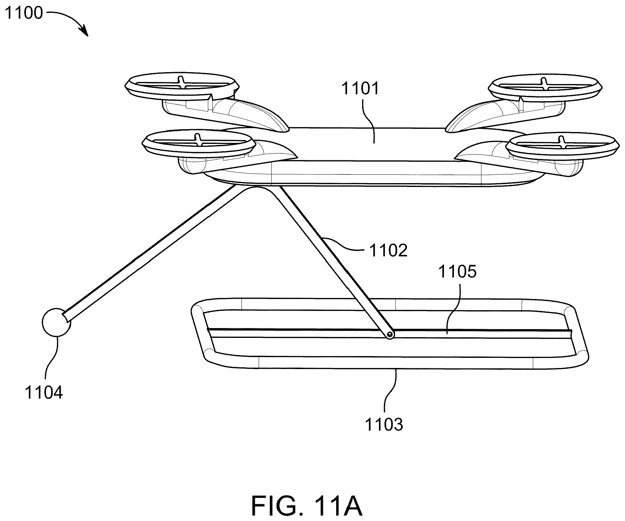

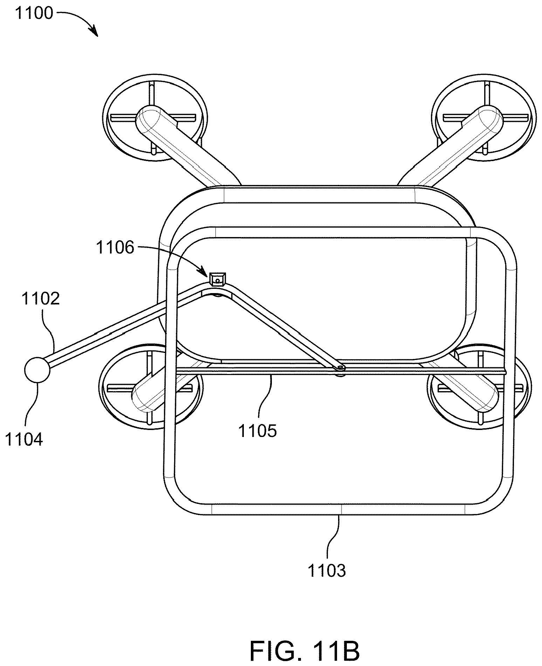

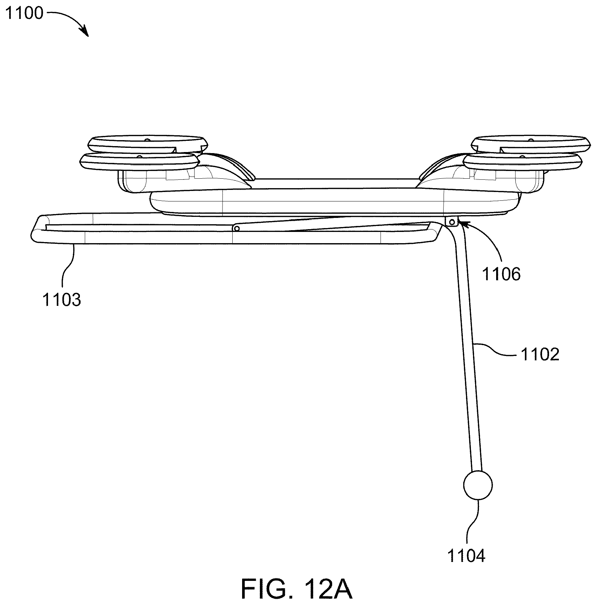

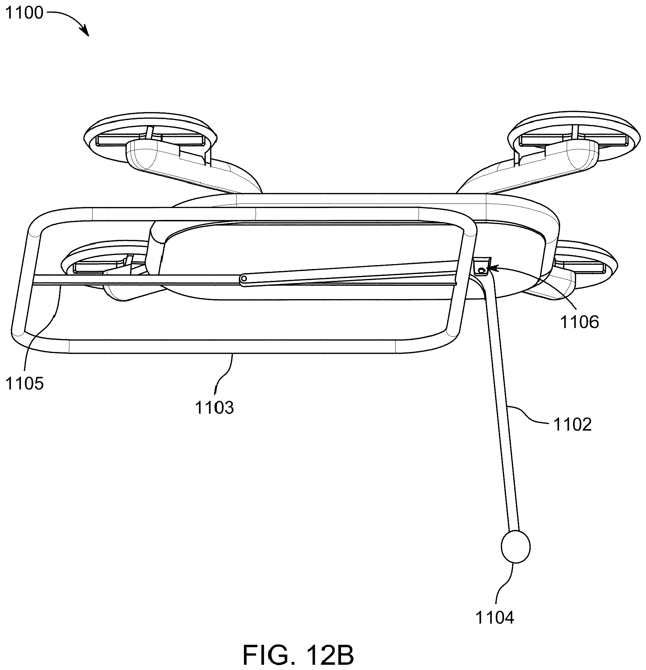

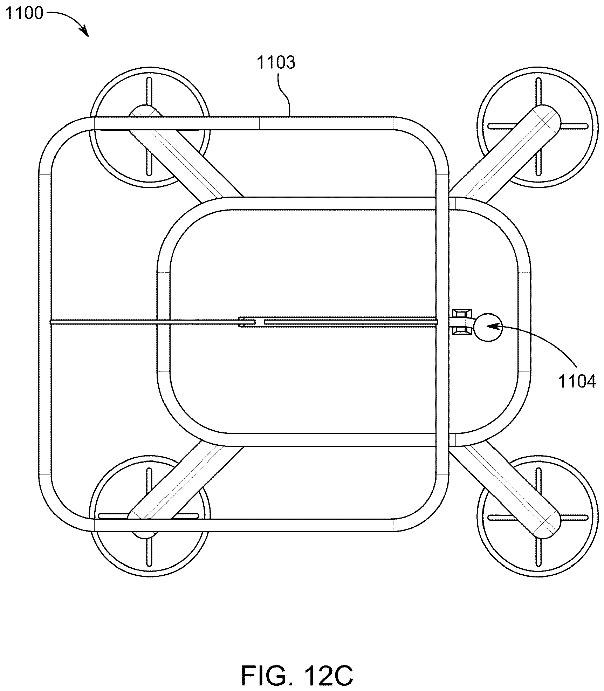

FIGs. 11A-11B show a drone (1100) with a wireless power receiver coil in a landing position (i.e., charging or extended position). FIGs. 12A-12C show the drone (1100) with the wireless power receiver coil in a flight position (i.e., non-charging or retracted position). A structural support (1105) attaches between two points at a receiver coil (1103). The structural support (1105) is attached to one end of a leg (1102). The leg (1102) has a curved shape. The leg (1102) is attached to the drone body (1101) at a curved portion with some axial freedom. A weight (1104) is attached to the other end of the leg (1102). When the drone is in a retracted (flight) mode as in FIGs. 12A-12C, the weight (1104), which is heavier than the receiver coil (1103), pulls the receiver coil (1103) towards the drone body (1101). When the drone is in an extended (landing) mode, the weight (1104) will touch the landing pad first and as the drone lowers its height towards the landing pad, the lever will turn around a point of connection (1106) such that the receiver coil (1103) is lowered towards the landing pad.

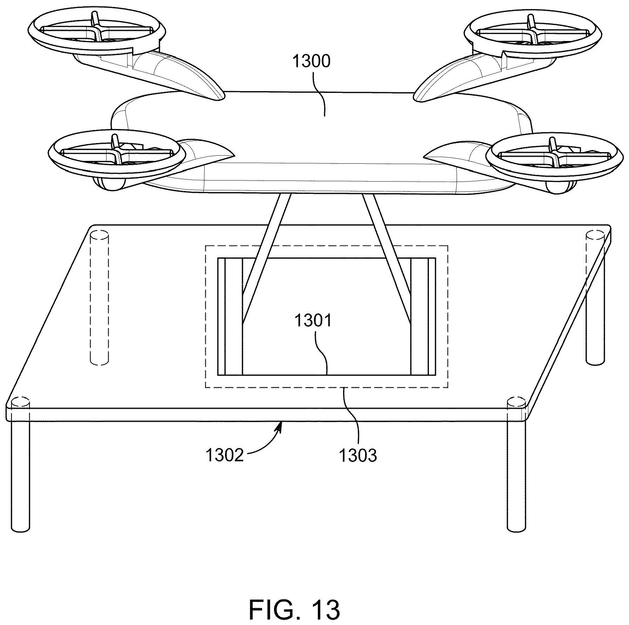

FIG. 13 shows a drone (1300) (consistent with any of the embodiments disclosed herein) with a wireless power receiver coil (1301) in an extended / landing position. The drone (1300) is on a landing pad (1302) with a wireless power transmitter coil (1303) configured to transfer power inductively from the transmitter coil to the receiver coil for charging the drone battery. The landing pad may be elevated. The elevation of the landing pad may help to reduce any interference with metallic material in a ground or floor surface. The landing pad may have a sensor that can determine when a drone is going to land and when the drone is on the pad and then may start a wireless power transfer. The drone may not need to be in an exact spot on the landing pad since the landing pad may have a large transmitter coil or a plurality of transmitter coils. The drone may have a sensor that may determine when it is close to a landing pad and then may deploy the landing gear and wireless receiver coil automatically. The landing pad may be configured to send a command to the drone for example when the drone is in range of the pad to deploy the landing gear.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A device comprising:
a wireless power receiver coil attached to a landing gear of a drone, wherein the wireless power receiver coil is closer to the drone when the landing gear is in a retracted position and farther away from the drone when the landing gear is in an extended position.

2. The device of claim 1, wherein a length of the wireless power receiver coil is the same length when the landing gear is in the retracted position and in the extended position.

3. The device of claim 1 or 2, wherein the wireless power receiver coil is in a first orientation when the landing gear is in the retracted position and wherein the wireless power receiver coil is in a different orientation when the landing gear is in the extended position.

4. The device of any of the preceding claims, wherein the wireless power receiver coil has a first shape when the landing gear is in the retracted position and the wireless power receiver coil has a second shape when the landing gear is in the extended position.

5. The device of claim 4, wherein the wireless power receiver coil length stays the same when the landing gear moves between the retracted position and the extended position.

6. The device of any of the preceding claims, wherein the wireless power receiver coil is configured to, when the landing gear is in the extended position and the landing gear is on a landing pad, receiver power inductively from a wireless power transmitter coil in the landing pad.

7. The device of claim 6, wherein the landing pad is elevated.

8. The device of any of the preceding claims, wherein the wireless power receiver coil is attached to retractable elements of landing feet of the landing gear.

9. The device of claim 8, wherein the retractable elements are extended when the landing gear is in the extended position and are retracted into the landing feet when the landing gear is in the retracted position.

10. The device of any of the preceding claims, wherein a length of the wireless power receiver coil is longer when the landing gear is in the extended position and shorter when the landing gear is in the retracted position.

11. The device of claim 10, wherein the wireless power receiver coil is configured to retract around a wheel when the landing gear moves from the extended position to the retracted position.

12. The device of any of the preceding claims, wherein the wireless power receiver coil is configured to separate when the landing gear moves from the extended position to the retracted position.

13. The device of any of the preceding claims, wherein the wireless power receiver coil is configured to join together at two locations when the landing gear moves from the retracted position to the extended position.

14. The device of any of the preceding claims, wherein the wireless power receiver coil is surrounded by a flexible conduit.

15. The device of any of the preceding claims, wherein the wireless power receiver coil is wrapped around landing legs of the drone, wherein the wireless power receiver coil is connected to wheel elements, wherein the wheel elements move along the landing legs when the landing legs move between a folded and un-folded position.
